# EUROPÄISCHE PATENTANMELDUNG

(11) **EP 1 422 450 A2**
(43) Veröffentlichungstag der Anmeldung: **26.05.2004**
(21) Anmeldenummer: 02008470.3
(22) Anmeldetag: 15.04.2002
(51) Int. Cl.: F16H 61/30, F16H 63/30

(54) **Hydraulische, radial wirkende Kupplungselemente für Stufenschaltgetriebe**

(30) Priorität: 15.06.2001 AT 4782001
(71) Anmelder: GHM Engineereing, 4407 Steyr-Glenk (AT)
(72) Erfinder: Jegel, Franz, Peter, Ing., 4400 Steyr (AT); Glassner, Rudolf, 3623 Kottes (AT); Leitner, Josef, 4154 Kollerschlag (AT)
(74) Vertreter: Schön, Theodor, Patent- und Zivilingenieur

(57) **Zusammenfassung**

Die vorliegende Erfindung betrifft ein Stufenschaltgetriebe, insbesondere für Kraftfahrzeuge, mit einer Antriebswelle mit einer Anzahl von Zahnrädern und einer Abtriebswelle mit einer Anzahl von korrespondierenden Zahnrädern, welche mit den Zahnrädern der Antriebswelle kämmend in Eingriff stehen, wobei die Zahnräder (4) auf der Antriebs- und/oder der Abtriebswelle durch radial wirkende Eingriffselemente (10) eines Schaltringes (2) in Bewegung versetzt werden, wobei diese Eingriffselemente (10) in eine innenliegende Verzahnung (17) eines Zahnrades (4) eingreifen und dabei formschlüssig mit der entsprechenden Welle (5) verbunden werden und wobei die Betätigung der Eingriffselemente (10) hydraulisch erfolgt.

## Beschreibung

Die vorliegende Erfindung betrifft ein Stufenschaltgetriebe, insbesondere für Kraftfahrzeuge, mit einer Antriebswelle mit einer Anzahl von Zahnrädern und einer Abtriebswelle mit einer Anzahl von Zahnrädern, welche mit den Zahnrädern der Antriebswelle kämmend in Eingriff stehen, wobei die Zahnräder auf der Antriebs- oder der Abtriebswelle durch radial wirkende Eingriffselemente eines Schaltringes in Bewegung versetzt werden, wobei diese Eingriffselemente in eine innenliegende Verzahnung eines Zahnrades eingreifen und dabei formschlüssig mit der entsprechenden Welle verbunden werden und wobei die Betätigung der Eingriffselemente hydraulisch erfolgt.

Herkömmliche Schaltgetriebe sind zum Beispiel dergestalt aufgebaut, dass Kupplungskeile in Ausnehmungen einer die Zahnräder tragenden Hohlwelle durch eine innerhalb der Hohlwelle verschiebbare Nockenstange radial nach außen zum Eingriff in die Hohlwelle umgebende Nuten von Mitnehmerteilen, die mit den Zahnrädern verbunden sind, verschiebbar sind.

Nachteilig ist dabei, dass die dabei zur Anwendung kommenden Kupplungselemente, wie einerseits Sperrbolzen oder -zapfen und andererseits an den einzelnen Stufenrädern vorgesehene, mit den Sperrbolzen oder -zapfen in Eingriff zu bringende Ausnehmungen, jeweils so gestaltet, ausgebildet und angeordnet sind, dass kein momentanes, d.h. im Bruchteil einer Sekunde, absolut verzögerungsfreies Gangschalten möglich ist, weil zwischen den einzelnen radial angeordneten Ausnehmungen gelegene Stoß- und Verzögerungsflächen zu überwinden sind, wodurch diese Eingriffselemente nicht nur unsicher und stockend arbeiten, sondern auch einem starken Verschleiß unterliegen und äußerst lästige Lärmgeräusche während der Schaltbetätigung verursachen.

Für einen einwandfreien Gangwechsel, sowohl beim hochschalten als auch beim zurückschalten, ist es notwendig Zahnräder mit gleicher Umfangsgeschwindigkeit ineinander greifen zu lassen, wobei die Drehzahlanpassung der Wellen über Synchronisierungen erfolgt. Modernere Stufenschaltgetriebe weisen deshalb Kupplungen mit Synchronisierungen auf, die jeweils zwischen zwei Zahnradpaaren auf der Antriebs- oder Abtriebswelle angeordnet sind, die jedoch einen erheblichen Raumbedarf im Getriebe erfordern. Es ist daher naheliegend, die Position der Kupplungselemente im Getriebe so festzulegen, dass sie innenliegend zwischen dem Zahnrad und der das Zahnrad tragenden Welle angeordnet sind. Dadurch kann ein Zahnradpaar neben dem anderen angeordnet werden, die axiale Baulänge eines Getriebes wird um den Bauraum der Kupplungen verkleinert, sodass das Schaltgetriebe wesentlich kleiner und leichter ausgebildet werden kann.

Ein derartiges Stufenschaltgetriebe ist bereits bekannt. Hierbei werden die auf einer Hohlwelle sitzenden Zahnräder über Kupplungskeile, die durch Ausnehmungen in der Hohlwelle durchgeführt sind und über eine innenliegende, axial verschiebbare Nockenstange betätigbar sind, formschlüssig mit der Hohlwelle verbunden.

Nachteilig ist bei dieser Vorrichtung jedoch, dass die Kupplungskeile über Schaltkulissen bewegt werden, die sehr genau angepaßt und gefertigt werden müssen. Die Schaltstöße bei der Betätigung und die große Anzahl der mitwirkenden Kontaktflächen bewirken einen großen Verschleiß und ein erhebliches Schaltgeräusch beim Gangwechsel.

Weitere bekannte Ausführungsformen derartiger Stufenschaltgetriebe sind nur mit einem großen baulichen Aufwand herstellbar, die das Gesamtvolumen und das Gewicht unverhältnismäßig vergrößern.

Die vorliegende Erfindung stellt sich daher die Aufgabe, ein völlig neuartiges Stufenschaltgetriebe zu schaffen, bei welchem der Wechsel von einem Gang zum nächsten genauso leicht, weich und sicher erfolgen kann, wie bei einem vollsynchronisierten Stufenschaltgetriebe, welches im Gegensatz dazu jedoch keiner zusätzlichen Synchronisierungseinrichtungen bedarf und damit einfacher herzustellen ist, dabei aber auch in vorteilhafter Weise eine erhebliche Reduzierung des Raumbedarfes und des Gewichtes mit sich bringt.

Diese Aufgabe wird durch die im Hauptanspruch angegebenen technischen Merkmale gelöst. Vorteilhafte Weiterentwicklungen oder zweckmäßige Ausgestaltungen sind in den Unteransprüchen angegeben.

Die Erfindung wird anhand der Figuren im Folgenden näher erläutert.

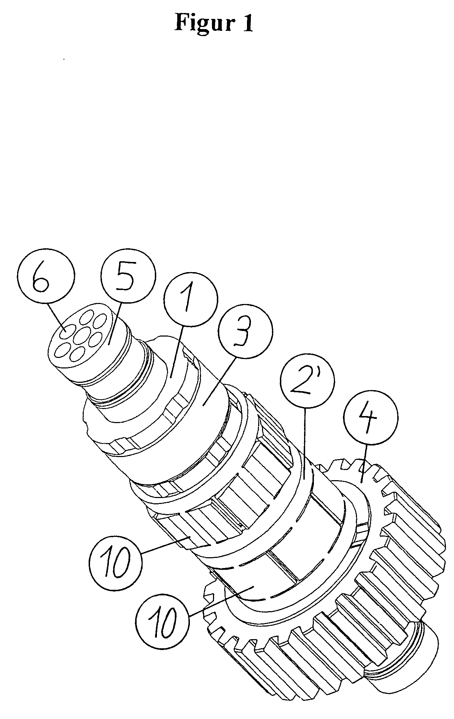

Hierin zeigt Fig. 1 eine Getriebewelle mit innenliegender Ölverteilerwelle und teilweise aufgesetzten Schaltringen und einem Zahnrad.

Fig. 2 stellt einen Schnitt durch einen Getriebeteil mit Getriebegehäuse und innenliegender Ölverteilerwelle, Getriebewelle und zwei nebeneinander angeordnete Zahnräder mit Schaltringen und Öldruckschläuchen dar.

Fig. 3 zeigt die Getriebewelle, ohne Ölverteilerwelle, ohne Öldruckschläuche und ohne aufgesetzten Schaltringen.

In Fig. 4 ist eine Schrägansicht eines Schaltringes mit ausklappbaren Eingriffselemente in entspanntem Zustand dargestellt.

In Fig. 5 ist der Schaltring aus Fig. 4 mit aufgeklappten Eingriffselemente zu erkennen.

In Fig. 6 ist in Schrägansicht ein Zahnrad dargestellt mit nach innen ragenden Zähnen, in welche im geschalteten Zustand die aufgeklappten Eingriffselemente nach Fig. 4 eingreifen. Sie umfassen mit ihren freiliegenden Stirnseiten die nach Innen ragenden Zähne des Zahnrades.

Fig. 7 zeigt einen Schnitt durch die Vorrichtung gemäß Fig. 1, wobei die Eingriffselemente im entspannten Zustand dargestellt sind.

Fig. 8 zeigt denselben Schnitt wie Fig. 7, jedoch mit im druckbeaufschlagten Zustand angehobenen Eingriffselementen.

In Fig. 9 ist eine Variante der Eingriffselemente gemäß dem Schnitt aus Fig. 7 dargestellt. Hier bestehen die Eingriffselemente aus federnden flachen Elementen mit bolzenartigen Erhebungen. Im entspannten Zustand reichen diese bolzenartigen Erhebungen nur bis maximal zur Oberkante des Schaltringes.

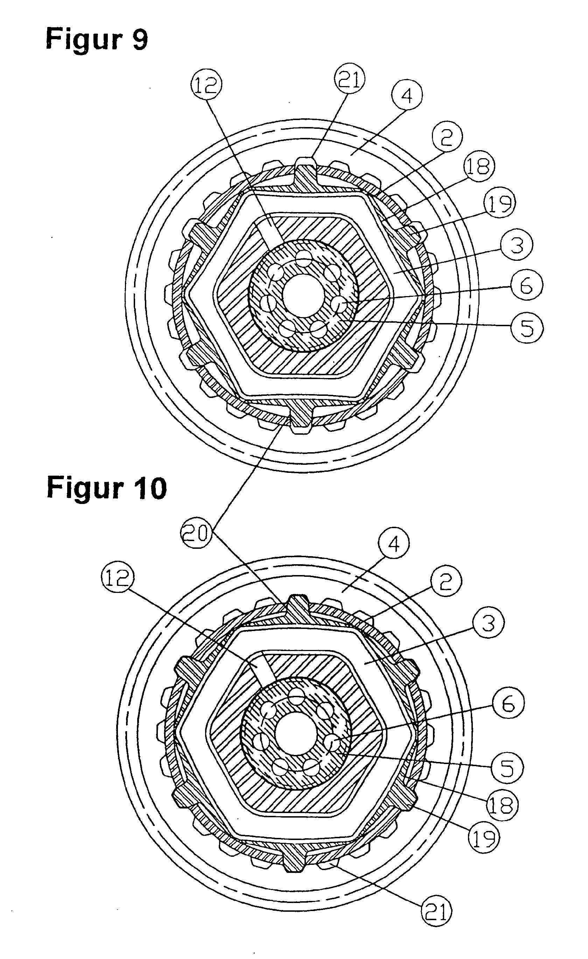

Aus Fig. 10 ist die Variante der Fig. 9 im druckbeaufschlagten Zustand erkennbar. Die federnden flachen Elemente werden durch den ölgefüllten Schlauch nach Außen gedrückt, wodurch die bolzenartigen Erhebungen in zahnförmige Ausnehmungen des Zahnrades eingreifen.

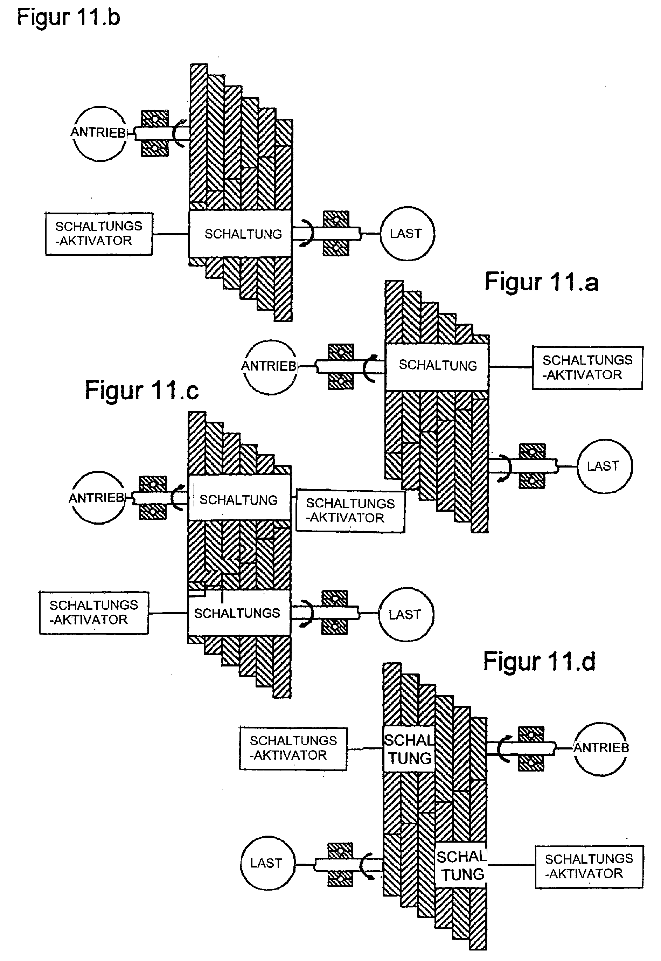

In Fig. 11 sind die möglichen Varianten der Positionierung der Schaltringe auf der Antriebsoder der Abtriebswelle dargestellt.

Wie aus Fig. 1 ersichtlich, setzt sich die Antriebswelle des Schaltgetriebes aus einer Getriebewelle 1 mit je einem aufgesetzten Schaltring 2, 2' für jeden Gang, einem um die Getriebewelle 1 umlaufend anliegenden und genau zwischen Getriebewelle 1 und Schaltring 2 angeordneten Öldruckschlauch 3, sowie einem über dem jeweiligen Schaltring 2, 2' angeordneten Zahnrad 4 zusammen. Innerhalb der Getriebewelle 1 liegt eine Ölverteilerwelle 5 mit je einer separaten Ölleitung 6 für jeden Gang. Für die Schaltringe 2, 2' sind in weiteren Figuren zwei Ausführungsvarianten exemplarisch dargestellt, es versteht sich jedoch von selbst, dass jeweils nur eine Ausführungsvariante für sämtliche Schaltringe einer Getriebewelle zur Anwendung kommt.

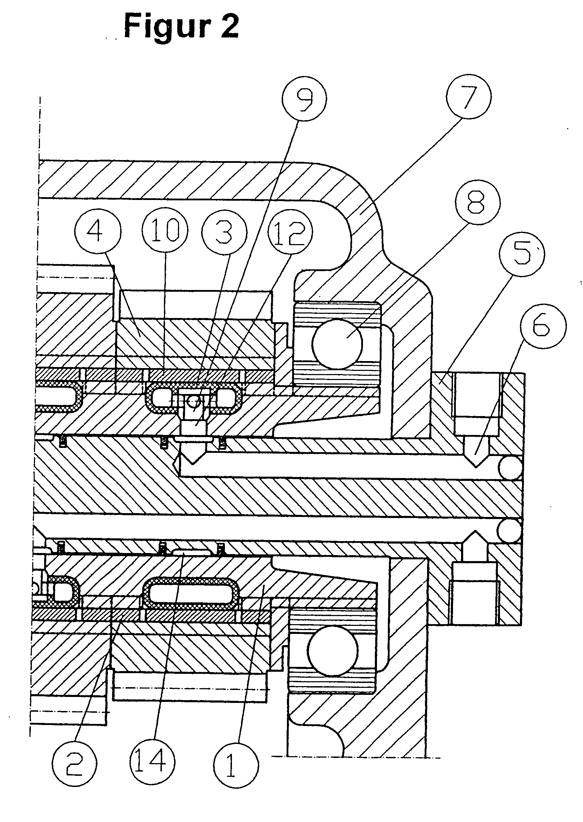

Die Ölverteilerwelle 5 ist fest mit dem Getriebegehäuse 7 verbunden, sh. Fig. 2. Die Getriebewelle 1 ist im Getriebegehäuse 7 über die Lager 8 drehbar gelagert. Von jeder Ölleitung 6 gelangt Hydrauliköl über eine Verbindungsbohrung 12 und ein Verbindungsstück 9 in den zugehörigen Öldruckschlauch 3. Sobald Hydrauliköl aus dem nicht dargestellten Öltank in Richtung zu einer bestimmten Ölleitung gedrückt wird, setzt sich dieser Öldruck bis in den zugehörigen Öldruckschlauch 3 fort und bewirkt im zugehörigen Schaltring 2, dass sich die ausklappbaren Eingriffselemente 10 aufstellen und in das darüber befindliche Zahnrad 4 eingreifen und dieses mitnehmen.

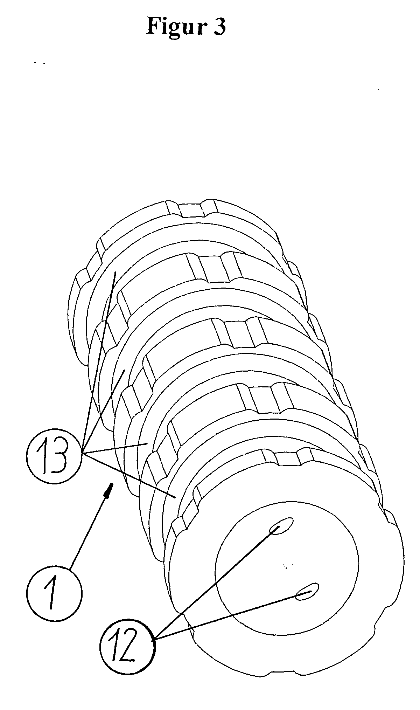

In Fig. 3 ist in Schrägansicht die Getriebewelle 1 separat dargestellt. Diese Getriebewelle 1 ist für insgesamt vier Gänge ausgelegt. Gut erkennbar sind die Verbindungsbohrungen 12 für das Hydrauliköl. In die Rillen 13 werden die Öldruckschläuche dergestalt eingelegt, dass sie die Getriebewelle 1 anliegend umfassen und ihre öldichten Verbindungsstücke 9 über die Verbindungsbohrung 12 den Durchgang des Hydrauliköles aus der Ölleitung 6 und dem Verteilring 14 gewährleisten.

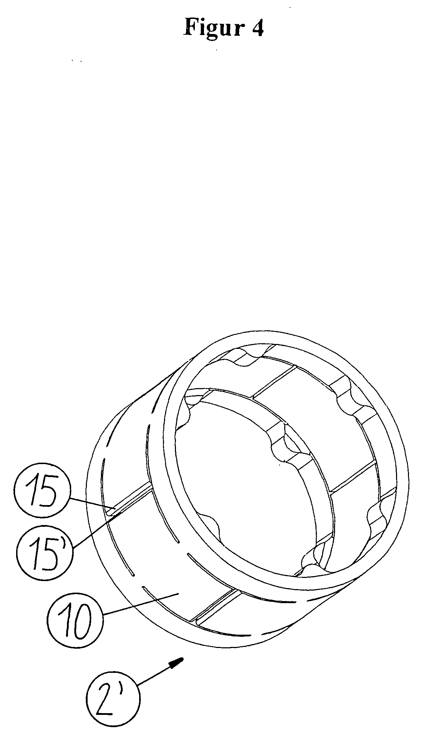

In Fig. 4 ist der Schaltring 2 separat dargestellt. Die ausklappbaren Eingriffselemente 10 sind hier als Laschen im entspannten Zustand dargestellt. Jeweils zwei Laschen liegen mit ihren freien Stirnflächen 15, 15' unmittelbar gegenüber. Durch Erhöhung des Öldruckes im hier nicht dargestellten darunter liegenden Öldruckschlauch 3 werden die Laschen nach außen gedrückt, wobei die freien Strinflächen 15, 15' die größte Auslenkung erfahren.

Die vorliegende Erfindung ist ausdrücklich nicht auf die hier gezeigten Ausführungsformen der Eingriffselemente 10 beschränkt, sie stellen lediglich mögliche Ausgestaltungsformen dar.

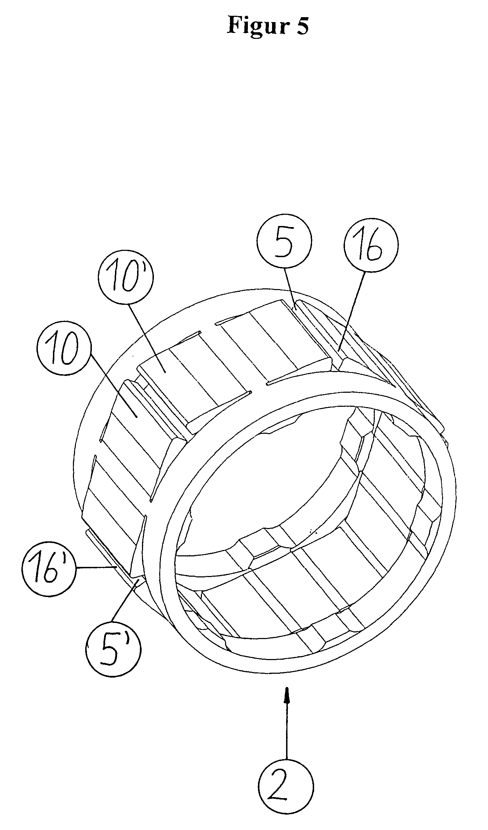

Der Schalring 2 aus Fig. 4 ist in Fig. 5 aktiviert dargestellt. Wichtig ist, dass die Eingriffselemente 10 an der Außenkante der Stirnflächen 5, 5' abgeschrägte, bevorzugt gewölbte Flächen 16, 16' aufweisen. Durch diese Flächen 16, 16' wird der Verschleiß in diesem Bereich reduziert und das gleitende Eingreifen bzw. wieder loslassen in die innenliegende Verzahnung 17 des Zahnrades 4 wird erleichtert.

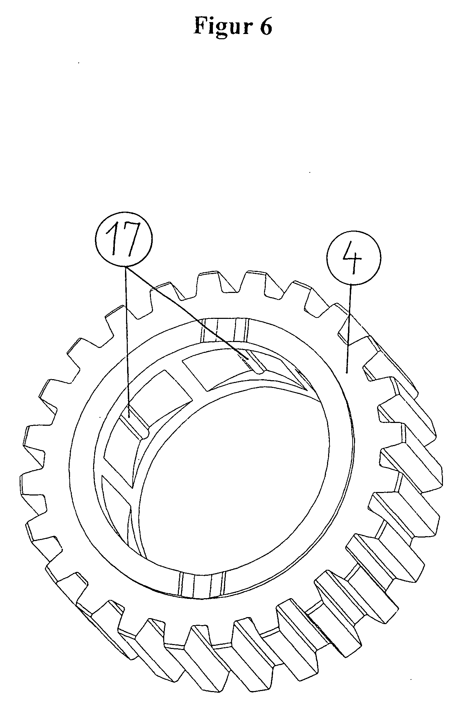

In Fig. 6 ist das Zahnrad 4 in Schrägansicht dargestellt. Das Zahnrad weist an seiner Innenseite Ausnehmungen auf, welche geeignet sind, die Eingriffselemente des Schaltringes 2 im aktivierten Zustand aufzunehmen, wobei die ausgeklappten Eingriffselemente mit ihren Stirnflächen die nach innen ragende Verzahnung 17 des Zahnrades 4 umfassen, wodurch das Zahnrad 4 in Drehung versetzt wird.

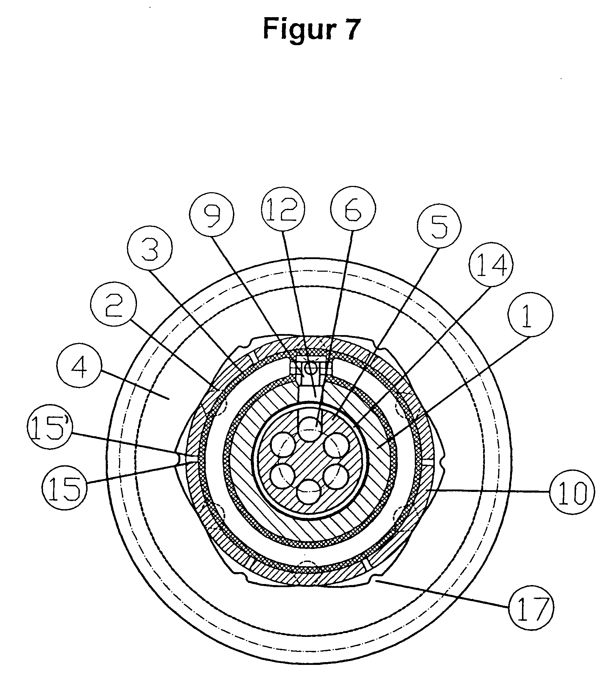

Fig. 7 zeigt einen Schnitt durch die Vorrichtung gemäß Fig. 1, wobei die Eingriffselemente im entspannten Zustand dargestellt sind, in einer der möglichen Ausführungsformen für die Eingriffselemente 10, welche hier als anhebbare, federnde Laschen dargestellt sind. Der Öldruckschlauch 3 ist nicht druckbeaufschlagt. Die Laschen 10 liegen in einer Ebene mit der Fläche des Schaltringes 2. Die Stirnflächen 5, 5' der Eingriffselemente 10 sind zueinander parallel ausgerichtet. Die innenliegende Verzahnung 17 des Zahnrades 4 liegt frei, das Zahnrad 4 wird nicht bewegt.

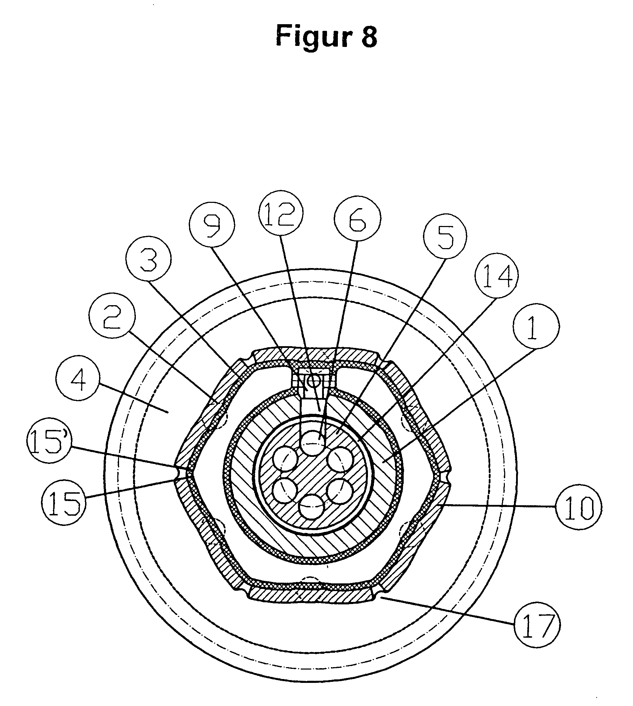

Fig. 8 zeigt denselben Schnitt wie Fig. 7, jedoch mit angehobenen Eingriffselementen 10. Der Öldruckschlauch 3 ist druckbeaufschlagt. Die Laschen 10 sind aus der Ebene der Fläche des Schaltringes 2 angehoben, die Stirnflächen 5, 5' der Eingriffselemente 10 umfassen formschlüssig die innenliegende Verzahnung 17 des Zahnrades 4, wodurch das Zahnrad 4 bewegt wird.

In Fig. 9 ist eine Variante der Eingriffselemente gemäß dem Schnitt aus Fig. 7 dargestellt. Hier bestehen die Eingriffselemente 10 aus federnden flachen Elementen 18 mit bolzenartigen Erhebungen 19. Die Eingriffselemente 10 sind hier nicht Teil des Schaltringes 2, sondern sind separate, frei liegende Bauteile, welche zwischen dem Schaltring 2 und dem Öldruckschlauch 3 angeordnet sind. Die Erhebungen 19 greifen durch Ausnehmungen 20 des Schaltringes, wobei dieses Durchgreifen der bolzenartigen Erhebungen 19 im entspannten Zustand nur bis maximal zur Oberkante des Schaltringes reichen.

Aus Fig. 10 ist die Variante der Fig. 9 im druckbeaufschlagten Zustand erkennbar. Die federnden flachen Elemente 18 werden durch den ölgefüllten Schlauch 3 nach Außen gedrückt, wodurch die bolzenartigen Erhebungen 19 in zahnförmige Ausnehmungen 21 des Zahnrades 4 eingreifen.

In Fig. 11 sind die möglichen Varianten der Positionierung der Schaltringe auf der Antriebs- bzw. der Abtriebswelle dargestellt. Bei der Darstellung nach Fig. 11a sitzen die Schaltringe auf der Antriebswelle, so wie es üblicherweise der Fall ist. Bei der Darstellung nach Fig. 11b sitzen die Schaltringe auf der Abtriebswelle. Diese Anordnung kann aus Gründen der Bauvolumenersparnis sinnvoll sein, um eine Verkürzung des Getriebes zu erzielen.

Die Anordnung nach der Darstellung nach Fig. 11c, wobei die Schaltringe sowohl auf der Antriebs- als auch auf der Abtriebswelle angeordnet ist, ist sinnvoll, um nicht die Gesamtmasse der zu den Zahnrädern 4 korrespondierenden Zahnräder bewegen zu müssen, was bei den Ausführungen nach 11a und 11b nötigt ist, aber eine Reduzierung des Wirkungsgrades mit sich bringt. Durch diese Anordnung sowohl auf der Antriebs- als auch auf der Abtriebswelle wird also der Wirkungsgrad verbessert und es wird zudem das abrupte Eingreifen abgeflacht und damit die Verschleißgefahr erheblich minimiert.

Bei Getrieben mit sehr kleinem Abstand zwischen der Antriebs- und der Abtriebswelle kann es zu Problemen mit dem zur Verfügung stehenden Durchmesser der Zahnräder kommen. Hier ist es vorteilhaft, jeweils nur bei den Zahnrädern mit größerem Durchmesser die Schaltringe 2 mit den Öldruckschläuchen 3 und den Eingriffselementen 10 vorzusehen. Die Ölverteilerwelle 5 wird hier auf die Antriebs- und die Abtriebswelle verteilt.

Die besonderen Vorteile dieser Erfindung liegen darin, dass die Synchronisierung entfällt, weshalb auch die Schaltgabeln, Schaltwellen, Schaltfinger, Lagerungen und Lagerstellen, sowie die innere und die äußere Schaltbetätigung entfallen. Das Getriebe weist eine ausgesprochen kurze und schmale Bauweise auf und ist daher sehr raumsparend. Es liegt als Zweiwellengetriebe vor und weist ein erheblich geringeres Gewicht auf als herkömmliche Getriebe. Bei einem Automatikgetriebe fallen zusätzlich zu den Schaltelementen auch die sehr aufwendigen und vor allem träge funktionierenden Aktuatoren weg. Die Hydrauliksteuerung ermöglicht zudem eine dem Fahrbetrieb angepaßte individuelle und feinfühlige Schaltmimik .

## Patentansprüche

1. Stufenschaltgetriebe, bestehend aus einem Getriebegehäuse, einer Antriebswelle mit einer Anzahl von Zahnrädern und einer Abtriebswelle mit einer Anzahl von korrespondierenden Zahnrädern, welche mit den Zahnrädern der Antriebswelle kämmend in Eingriff stehen, mindestens einer Getriebewelle, mehreren auf dieser Getriebewelle angeordneten Schaltringen mit radial wirkenden Eingriffselementen, welche in das zugeordnete Zahnrad eingreifen, um dieses zu drehen und über dieses Zahnrad ein damit korrespondierendes Zahnrad anzutreiben **dadurch gekennzeichnet, dass** mit dem Getriebegehäuse (7) mindestens eine Ölverteilerwelle (5) fix verbunden ist, dass die Ölverteilerwelle (5) innerhalb der Getriebewelle (1) angeordnet ist und für jede Gangstufe einen gesonderten Hydraulikölkanal (6) aufweist, welcher in einem Verteilerkanal 14 mündet, der zu einem Verbindungselement (9) führt, welcher das Übergangsstück für das Hydrauliköl zu einem ölgefüllten Schlauch (3) bildet, wobei der ölgefüllte Schlauch (3) auf der Getriebewelle (1) umlaufend unterhalb des Schaltringes (2) liegend angeordnet ist, dass der Schaltring (2) über anhebbare Eingriffselemente (10) verfügt, welche bei einer Druckbeaufschlagung des darunter liegenden Öldruckschlauches (3) mit Hydrauliköl aus einer entspannten Lage in eine nach Außen vorgerichtete Lage gebracht werden und dabei mit dem Zahnrad (4) in formschlüssige Wechselwirkung treten.

2. Stufenschaltgetriebe nach Anspruch 1, **dadurch gekennzeichnet, dass** die Zahnräder (4), welche durch Eingriffselemente (10) eines Schaltringes (2) in Bewegung versetzt werden, auf einer Getriebewelle (1) positioniert sind, wobei diese Getriebewelle (1) sowohl auf der Antriebswelle als auch auf der Abtriebswelle, als auch auf beiden Wellen vorgesehen sein kann, wobei sie auch nur abschnittsweise vorgesehen sein kann.

3. Stufenschaltgetriebe nach Anspruch 1 oder 2, **dadurch gekennzeichnet, dass** die Eingriffselemente (10) als federnde Laschen ausgebildet sind, welche aus der Wandung des Schaltringes 2 durch entsprechende Aufschlitzung entstehen und wobei je zwei unmittelbar nebeneinander liegende Laschen eine gemeinsame Mittelöffnung (11') bilden, welche eine nach innen weisende Verzahnung (17) des Zahnrades (4) aufnimmt, wobei die freiliegenden Stirnseiten (15, 15') der benachbarten Laschen diese Verzahnung (17) umgreifen und zwischen sich einklemmen.

4. Stufenschaltgetriebe nach Anspruch 1 bis 3, **dadurch gekennzeichnet, dass** die Eingriffselemente (10) dergestalt ausgebildet sind, dass ihre größte Auslenkung in Laufrichtung des darüber liegenden Zahnrades 4 liegt.

5. Stufenschaltgetriebe nach Anspruch 1 oder 2, **dadurch gekennzeichnet, dass** die Eingriffselemente (10) aus federnden flachen Elementen (18) mit bolzenartigen Elementen (19) gebildet werden, welche zwischen dem Schaltring (2) und dem ölgefüllten Schlauch (3) frei liegend angeordnet sind und bei Druckbeaufschlagung des ölgefüllten Schlauches (3) durch Ausnehmungen (20) des Schaltringes (2) durchgreifend in innenliegende Ausnehmungen (21) des Zahnrades (4) formschlüssig eingreifen.

6. Stufenschaltgetriebe nach Anspruch 5, **dadurch gekennzeichnet, dass** die bolzenartigen Elemente (19) als Erhebungen der frei zwischen dem ölgefüllten Schlauch (3) und dem Schaltring (2) gelagerten, federnden Elemente (18) ausgebildet sind.

7. Stufenschaltgetriebe nach Anspruch 5, **dadurch gekennzeichnet, dass** die bolzenartigen Elemente (19) als separate Bauteile auf den frei zwischen dem ölgefüllten Schlauch (3) und dem Schaltring (2) gelagerten, federnden Elementen (18) fixiert sind.

8. Stufenschaltgetriebe nach Anspruch 1 oder 2, **dadurch gekennzeichnet, dass** die Eingriffselemente (10) als Haken ausgebildet sind, welche in innenliegende Ausnehmungen des Zahnrades (4) eingreifen.

9. Verfahren zum Betreiben eines Stufenschaltgetriebes, insbesondere für Kraftfahrzeuge, **dadurch gekennzeichnet, dass** die Betätigung von Eingriffselementen (10), welche an einem Schaltring (2) angeordnet sind und mit einem Zahnrad (4) in formschlüssige Wechselwirkung treten, um dieses anzutreiben, über einen elastischen ölgefüllten Schlauch (3) erfolgt, welcher durch Druckbeaufschlagung mit Hydrauliköl gedehnt wird.

10. Verfahren nach Anspruch 9, **dadurch gekennzeichnet, dass** bei einer Druckentspannung im Öldruckschlauch (3) das Zahnrad (4) die anhebbaren federnden Eingriffselemente (10) am Schaltring (2) in die entspannte Lage drücken und damit gleichzeitig das Hydrauliköl in den Hydrauliktank zurück drücken.

11. Verfahren nach Anspruch 9, **dadurch gekennzeichnet, dass** bei einer Druckentspannung im Öldruckschlauch (3) ein bolzenartiges Element (19) durch die Federwirkung eines flachen Elementes (18) die formschlüssige Verbindung zum Zahnrad (4) verliert.

12. Verfahren nach Anspruch 9, **dadurch gekennzeichnet, dass** das bolzenartige Element (19) durch Anlegen eines Unterdruckes auf den ölgefüllten Schlauch (3) die formschlüssige Verbindung zum Zahnrad (4) verliert.

13. Verfahren nach einem der Ansprüche 9 bis 12, **dadurch gekennzeichnet, dass** die Druckentspannung im ölgefüllten Schlauch (3) durch Deaktivierung der Fahrkupplung und die Druckbeaufschlagung des ölgefüllten Schlauches (3) eines benachbarten Ganges durch neuerliche Aktivierung der Fahrkupplung ausgelöst wird.

14. Verfahren nach einem der Ansprüche 9 bis 13, **dadurch gekennzeichnet, dass** die Wahl des Ölkanals (6) für die Druckbeaufschlagung des ölgefüllten Schlauches (3) über einen Schalthebel erfolgt.

15. Verfahren nach einem der Ansprüche 9 bis 14, **dadurch gekennzeichnet, dass** die Wahl des Ölkanals (6) für die Druckbeaufschlagung des ölgefüllten Schlauches (3) über ein Signal erfolgt.

16. Verfahren nach einem der Ansprüche 9 bis 15, **dadurch gekennzeichnet, dass** die Wahl des Ölkanals (6) für die Druckbeaufschlagung des ölgefüllten Schlauches (3) über ein Signal nach einem vorgegebenen Programm erfolgt.

17. Verfahren nach einem der Ansprüche 9 bis 16, **dadurch gekennzeichnet, dass** die Druckbeaufschlagung eines bestimmten Ölkanals (6) annähernd gleichzeitig die Druckentlastung aller übrigen Kanäle (6) auslöst.
